# EUROPÄISCHE PATENTSCHRIFT

(11) **EP 3 172 279 B1**
(45) Veröffentlichungstag und Bekanntmachung des Hinweises auf die Patenterteilung: **23.05.2018**
(21) Anmeldenummer: 16702486.8
(22) Anmeldetag: 18.01.2016
(51) Int. Cl.: C08L 83/04

(54) **DURCH KONDENSATIONSREAKTION VERNETZBARE ORGANOPOLYSILOXANMASSEN**
ORGANOPOLYSILOXANE COMPOSITIONS WHICH CAN BE CROSSLINKED BY MEANS OF A CONDENSATION REACTION
MATIÈRES À BASE D'ORGANOPOLYSILOXANE RÉTICULABLES PAR RÉACTION DE CONDENSATION

(30) Priorität: 28.01.2015 DE 102015201423
(43) Veröffentlichungstag der Anmeldung: 31.05.2017
(73) Patentinhaber: Wacker Chemie AG, 81737 München (DE)
(72) Erfinder: SIXT, Torsten, 84561 Mehring (DE); NEUHAUSER, Franz, 5132 Geretsberg (AT)
(74) Vertreter: Deffner-Lehner, Maria
(86) Internationale Anmeldenummer: PCT/EP2016/050871
(87) Internationale Veröffentlichungsnummer: WO 2016/120106

(56) Entgegenhaltungen:
- WO-A1-2009/080266
- WO-A1-2009/080267
- DE-A1- 3 439 745

## Beschreibung

Die Erfindung betrifft durch Kondensationsreaktion vernetzbare Organopolysiloxanmassen, insbesondere einkomponentige, Füllstoff enthaltende, unter Einfluss von Feuchtigkeit vernetzende Organopolysiloxanmassen, die unter Abspaltung von Carbonsäuren, wie Essigsäure, zu Elastomeren vernetzen.

Unter Ausschluss von Wasser lagerfähige, bei Zutritt von Wasser bei Raumtemperatur zu Elastomeren vulkanisierende Einkomponenten-Siliconkautschukmischungen (RTV1-Massen) sind bekannt. Diese Produkte werden in großen Mengen zum Beispiel als Fugendichtmassen in der Bauindustrie eingesetzt. Das Eigenschaftsprofil erfordert eine Vielzahl von Produktmerkmalen für den jeweiligen Anwendungszweck, die nötig sind, um die Paste gut verarbeiten zu können, um rasch und vollständig zu härten und im vulkanisierten Zustand dauerhaft seine Funktion zu erfüllen.

Die Basis dieser RTV1-Mischungen sind Polydiorganosiloxane, die entweder durch OH-Gruppen oder durch Silylgruppen, die hydrolysierbare Gruppen tragen, terminiert sind. Durch die Kettenlänge der Polymere und durch die verwendeten Füllstoffe können wesentliche Eigenschaften der RTV1-Mischungen beeinflusst werden. In Dichtungsanwendungen, bei denen die elastische Fuge größeren Bewegungen ausgesetzt sind, ist insbesondere die sogenannte Bewegungsaufnahme eine wichtige Kenngröße. Für die dauerhafte Funktionserfüllung muss diese stabil bleiben, darf sich beispielsweise nicht durch starken Schrumpf verringern.

Einflussgrößen für die Bewegungsaufnahme sind vor allem die Kettenlängen der eingesetzten Polymere und Füllstoffe. Durch größere Kettenlänge erhöht sich die Bewegungsaufnahme, durch verstärkende Füllstoffe erniedrigt sie sich bei gleichzeitig steigendem Modul. Aus ökonomischen und technischen Gründen steht jedoch für die Produktion von RTV1-Mischungen nur eine begrenzte Palette von Polymerkettenlängen zur Verfügung. Größere Kettenlängen führen zu sehr hohen Viskositäten der Polymere, so dass die anwendungsfertigen Produkte wegen der dann hohen Viskosität schlechter verarbeitbar werden. Ein Ausgleich durch Weichmacher führt zu erhöhter Flüchtigkeit, damit zu höherem Gewichtsverlust, was sich negativ auf die Funktionserfüllung, speziell auf die Anforderung der hohen Bewegungsaufnahme auswirkt. Deshalb bieten Füllstoffe eine Möglichkeit zur Einstellung der Eigenschaften. Allerdings bestehen einige Einschränkungen für die Auswahl der Füllstoffe, speziell bei Zubereitungen, die unter Abspaltung von Carbonsäuren, wie Essigsäure, vernetzen.

Beispielsweise beschreiben JP 10-316858 und US 5,938,853 A die Verwendung von beschichteten Kreiden, um die Freisetzung von CO₂ aufgrund der Reaktion mit der von den Acetoxysilanen abgespaltener Essigsäure mit dem Carbonat zu verhindern. Durch die Bearbeitung im Mischer oder Kneter kann die Beschichtung jedoch beschädigt werden und die Freisetzung von CO₂ erfolgt, was zum Aufblähen von Kartuschen führt.

DE 34 39 745 A1 beschreibt alternativ den Einsatz von zuvor oberflächenvorbehandelten Silikaten. Silikate sind leicht verstärkende Füllstoffe, was zu steigendem Modul und sinkender Bewegungsaufnahme führt.

Die Verwendung von Kaolin als Füllstoff für Essigmassen wird in WO 2009/080266 A1 beschrieben. Auch hier erhöht sich der Modul der Dichtmassen erheblich, was zu einer erhöhten Flankenbelastung in Fugenanwendungen führt. Hohe Bewegungsaufnahmen sind damit ebenfalls nicht realisierbar.

Weitere Füllstoffe, die mit Essigmassen verträglich sind, wie beispielsweise Quarzpulver, führen ebenso zu einer niedrigen Bewegungsaufnahme.

Der Erfindung liegt die Aufgabe zugrunde, Organopolysiloxanmassen bereitzustellen, die unter Abspaltung von Carbonsäuren, wie Essigsäure, zu Elastomeren vernetzen, wobei die Elastomere eine hohe Bewegungsaufnahme aufweisen, und die Organopolysiloxanmassen darüber hinaus eine hohe Lagerstabilität aufweisen, gut verarbeitbar sind, einen geringen Schwund aufweisen und ein gutes Vernetzungsverhalten zeigen. Die Aufgabe wird durch die Erfindung gelöst.

Die Bewegungsaufnahme ist zu verstehen als die Erfüllung und Einstufung eines Dichtstoffs in eine Klasse nach ASTM C 920 Kapitel 4, der die Messung nach ASTM C 719 (Test Method for Adhesion and Cohesion of Elastomeric Joint Sealants under Cyclic Movement, "Hockman Cycle") zugrunde liegt.

Gegenstand der Erfindung sind durch Kondensationsreaktion vernetzbare Organopolysiloxanmassen herstellbar unter Verwendung von
(1) kondensationsfähige Endgruppen aufweisende Organopolysiloxane,
(2) mindestens drei direkt an Silicium gebundene Acyloxygruppen aufweisende Organosiliciumverbindungen,
(3) Kondensationskatalysatoren,
(4) Anhydrit und
(5) Kieselsäuren, in Mengen von mindestens 1 und höchstens 15 Gew.-teilen, bevorzugt höchstens 10 Gew.-teilen, jeweils bezogen auf 100 Gew.-teile Organopolysiloxane (1),
   mit der Maßgabe, dass
(6) die Mitverwendung von Kaolin ausgeschlossen ist,
(7) weitere Füllstoffe in Mengen von höchstens 25 Gew.-teilen, vorzugsweise höchstens 15 Gew.-teilen, bevorzugt höchstens 5 Gew.-teilen, jeweils bezogen auf 100 Gew-teile Organopolysiloxane (1), mitverwendet werden und
(8) ggf. weitere Stoffe, die üblicherweise in durch Kondensationsreaktion vernetzbare Massen mitverwendet werden und die verschieden von den Bestandteilen (1) bis (7) sind.

Als kondensationsfähige Endgruppen aufweisende Organopolysiloxane (1) werden vorzugsweise solche der Formel

HO(R₂SiO)ₙH (I),

eingesetzt, wobei
R gleich oder verschieden sein kann und einen einwertigen, gegebenenfalls substituierten Kohlenwasserstoffrest bedeutet und
n eine ganze Zahl von 500 bis 2000, bevorzugt von 600 bis 1700, insbesondere von 600 bis 1300, ist.

Es kann eine Art von Organopolysiloxan (1) oder ein Gemisch aus mindestens zwei Arten von Organopolysiloxanen (1) eingesetzt werden.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-¬Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethyl-pentylrest, Nonylreste, wie der n-Nonylrest, Decylreste, wie der n-Decylrest, und Dodecylreste, wie der n-Dodecylrest; Cycloalkylreste, wie Cyclopentyl , Cyclohexyl-, Cycloheptyl- und Methylcyclohexylreste; Alkenylreste, wie der Vinyl-, 5-Hexenyl , Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenylrest; Alkarylreste, wie o-, m-, p-Tolylreste; und Aralkylreste, wie der Benzylrest, der α- und der ß-Phenylethylrest.

Beispiele für substituierte Reste R sind Halogenalkylreste, wie der 3,3,3-Trifluor-n-propylrest, der 2,2,2,2',2',2'-Hexa¬fluorisopropylrest, der Heptafluorisopropylrest und Halogenarylreste, der Chlormethylrest, wie der o-, m- und p-Chlorphenylrest, sowie alle oben genannten Reste, die mit, epoxyfunktionellen Gruppen, Carboxygruppen, Enamingruppen, Aminogruppen, Aminoethylaminogruppen, Aryloxygruppen, Acryloxygruppen, Methacryloxygruppen, Hydroxygruppen und Halogengruppen substituiert sein können.

Bevorzugt handelt es sich bei dem Rest R um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen oder (Poly)glykolresten substituiert sind, wobei die (Poly)glykolreste insbesondere aus Oxyethylen- und/oder Oxypropyleneinheiten aufgebaut sind. Besonders bevorzugt handelt es sich beim Rest R um Alkylreste mit 1 bis 12 Kohlenstoffatomen, insbesondere um den Methylrest.

Bevorzugt handelt es sich bei den Organopolysiloxanen (1) um α,ω-Dihydroxydialkylpolysiloxane, besonders bevorzugt um α,ω-Dihydroxypolydimethylsiloxane.

Beispiele für Organopolysiloxane (1) sind (HO)Me₂SiO[SiMe₂O]ₓSiMe₂(OH), (HO)Me₂SiO[SiMe₂O]ₓ[SiMePhO]_{y}SiMe₂(OH) mit Me gleich Methylrest und Ph gleich Phenylrest, wobei die einzelnen Einheiten statistisch im Molekül verteilt sein können, wobei x eine Zahl von 500 bis 2000, bevorzugt 600 bis 1700, besonders bevorzugt 600 bis 1300, ist und y eine solche Zahl darstellt, dass y/x bevorzugt 0,01 bis 0,1.

Die erfindungsgemäß eingesetzten Organopolysiloxane (1) haben eine Viskosität von bevorzugt 10 000 bis 700 000 mPa˙s, besonders bevorzugt von 20 000 bis 400 000 mPa˙s, insbesondere von 50 000 bis 200 000 mPa˙s, jeweils bei 25°C.

Bei den Organopolysiloxane (1) handelt es sich um handelsübliche Produkte bzw. können diese nach in der Siliciumchemie gängigen Methoden hergestellt werden.

Als mindestens drei direkt an Silicium gebundene Acyloxygruppen aufweisende Organosiliciumverbindungen (2) werden vorzugsweise Acyloxy-funktionelle Silane der Formel

R¹_{d}Si(OC(=O)R²)_{4-d} (II)

und/oder deren Teilhydrolysate mit bis zu 10 Siliciumatomen, eingesetzt, wobei
R¹ gleich oder verschieden sein kann und einen einwertigen, gegebenenfalls substituierten Kohlenwasserstoffrest bedeutet,
R² gleich oder verschieden sein kann und einen einwertigen, gegebenenfalls substituierten Kohlenwasserstoffrest bedeutet und
d 1 ist,
Beispiele für Reste R gelten im vollen Umfang für Reste R¹. Bevorzugt ist der Rest R¹ ein Kohlenwasserstoffrest mit 1 bis 6 Kohlenstoffatomen, insbesondere der Methyl-, Ethyl-, Propyl-, Vinyl- oder Phenylrest.

Beispiele für Reste R gelten im vollen Umfang für Reste R².

Bevorzugt ist der Rest R² ein Kohlenwasserstoffrest mit 1 bis 6 Kohlenstoffatomen, insbesondere der Methyl-, Ethyl-, Propyl-, Vinyl- oder Phenylrest, besonders bevorzugt der Methylrest.

Acyloxygruppen aufweisende Organosiliciumverbindungen (2) werden vorzugsweise in Mengen von 5 bis 20 Gew.-teilen, bevorzugt 8 bis 15 Gew.-teilen, jeweils bezogen auf 100 Gew.teile Organopolysiloxane (1) eingesetzt.

Es kann eine Art von Organosiliciumverbindungen (2) oder ein Gemisch aus mindestens zwei Arten von Organosiliciumverbindungen (2) eingesetzt werden.

Anstelle der Organopolysiloxane der Formel (I) können auch solche Organopolysiloxane (1') eingesetzt werden herstellbar durch Umsetzung von kondensationsfähige Endgruppen aufweisenden Organopolysiloxanen (1) mit Acyloxygruppen aufweisenden Organosiliciumverbindungen (2) ggf. in Gegenwart von Kondensationskatalysatoren (3). Bevorzugt sind dabei solche der Formel

(R²(O=)CO)_{3-d}R¹_{d}SiO(R₂SiO)ₙSiR¹_{d}(OC(=O) R²)_{3-d} (I'),

wobei R, R¹, R², d und n die oben dafür angegebene Bedeutung haben.

Die Organopolysiloxane (1') weisen dabei einen Gesamtgehalt an Si-gebundenen Acyloxy-Gruppen von vorzugsweise 1200 bis 6000 Gew.-ppm, bevorzugt von 1500 bis 5000 Gew.-ppm, besonders bevorzugt 1800 bis 4000 Gew.-ppm, auf mit R² gleich der obengenannten Bedeutung.

Die erfindungsgemäß eingesetzten Organopolysiloxane (1) bzw. (1') sind bevorzugt bei Raumtemperatur (25°C) und dem Druck der umgebenden Atmosphäre, also zwischen 900 und 1100 hPa, flüssig.

Als Kondensationskatalysatoren (3) können zinn-freie Kondensationskatalysatoren (3a) oder zinn-haltige Kondensationskatalysatoren (3b) eingesetzt werden. Beispiele für zinn-freie Kondensationskatalysatoren (3a) sind organische Verbindungen von Zink, Zirkonium, Titan, Bismut, Strontium, Eisen und Aluminium. Bevorzugt unter diesen Kondensationskatalysatoren sind Alkyltitanate, Titanchelate, Carboxylate von Bismut, Strontium und Zink. Beispiele für zinn-haltige Kondensationskatalysatoren (3b) sind organische Zinnverbindungen, wie Di-n-butylzinndiacetat, Di-n-butylzinndilaurat, Di-n-octylzinndiacetat, Di-n-octylzinndilaurat und Umsetzungsprodukte von Alkoxygruppen aufweisenden Silanen oder deren Oligomere mit Diorganozinndiacylaten oder Diorganozinnoxiden.

Werden zinn-freie Kondensationskatalysatoren (3a) eingesetzt, so werden sie in Mengen von vorzugsweise 50 bis 5000 Gew.-ppm, bevorzugt 100 bis 4000 Gew.-ppm, insbesondere 200 bis 3000 Gew.-ppm, jeweils berechnet als elementares Metall und jeweils bezogen auf das Gesamtgewicht an Organopolysiloxanen (1), eingesetzt.
Werden zinn-haltige Kondensationskatalysatoren (3b) eingesetzt, so werden sie in Mengen von vorzugsweise 10 bis 500 Gew.-ppm, bevorzugt 20 bis 250 Gew.-ppm, jeweils berechnet als elementares Zinnmetall und jeweils bezogen auf das Gesamtgewicht an Organopolysiloxanen (1), eingesetzt.

Erfindungsgemäß eingesetzter Anhydrit (4) wird in Mengen von vorzugsweise 30 bis 200 Gew.-teilen, bevorzugt 50 bis 150 Gew.teilen, besonders bevorzugt 70 bis 125 Gew.-teilen, jeweils bezogen auf 100 Gew.-teile Organopolysiloxan (1) eingesetzt.

Anhydrit ist ein Calciumsulfat mit bis zu 0,5 Hydratwasser, also CaSO₄ * z H₂O mit 0<z<0,5, beispielsweise im Unterschied zu Gips, welches ein Calciumsulfat mit 2 Hydratwasser, also CaSO₄ * 2 H₂O, ist. Entsprechende Anhydrite sind kommerziell erhältlich als Anhydrite Super (Fa. Caltra, Mijdrecht, Niederlande) oder Krone HEF (Hilliger Gipswerke, Osterode, Deutschland).

Als erfindungsgemäß eingesetzte Kieselsäuren (5) werden bevorzugt pyrogen erzeugte Kieselsäuren eingesetzt.

Vorzugsweise weisen die erfindungsgemäß eingesetzten Kieselsäuren (5) eine spezifische BET-Oberfläche von 30 bis 500 m²/g, bevorzugt 100 bis 300 m²/g, auf. Die BET-Oberfläche wird nach bekannten Verfahren gemessen, in einer bevorzugten Ausführung wird die spezifische Oberfläche als BET-Oberfläche mittels Stickstoff BET-N₂ bei der Siedetemperatur des flüssigen Stickstoffs gemessen, bevorzugt gemäß Deutscher Industrie Norm DIN 66131 und DIN 66132.

Bei den erfindungsgemäßen Organopolysiloxanmassen können weitere Füllstoffe (7) mitverwendet werden. Beispiele für weitere Füllstoffe (7) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Talkum, Siliciumnitrid, Siliciumcarbid, Bornitrid, Glas- und Kunststoffpulver, wie Polyacrylnitrilpulver; und verstärkende Füllstoffe, also Füllstoffe mit einer BET-Oberfläche von mehr als 50 m²/g, wie Ruße, beispielsweise Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder durch Veretherung von Hydroxylgruppen zu Alkoxygruppen. Falls weitere Füllstoffe (7) eingesetzt werden, handelt es sich bevorzugt um Talkum, Ruß oder Silikate, die nicht zur Gruppe der Kaoline gehören.

Bevorzugt ist die Mitverwendung von weiteren Füllstoffen (7) ausgeschlossen.

Zusätzlich zu den Bestandteilen (1), (2), (3), (4), (5), und (7) können die erfindungsgemäßen Massen gegebenenfalls weitere Stoffe (8) enthalten, die auch bisher in durch Kondensationsreaktion vernetzbaren Massen eingesetzt worden sind und die verschieden sind zu Bestandteilen (1) bis (7) sind. Bevorzugte Beispiele für weitere Stoffe (8) sind Weichmacher, Fungizide, Haftvermittler, Rheologieadditive und Pigmente und deren Mischungen.

Beispiele für Weichmacher sind Kohlenwasserstoffgemische mit einer kinematischen Viskosität von kleiner 7 mm²/s bei 40°C und durch Triorganosiloxygruppen endblockierte Diorganopolysiloxane, wie durch Trimethylsiloxygruppen endblockierte Dimethylpolysiloxane, die bevorzugt eine Viskosität von 10 bis 10 000 mPa˙s bei 25°C aufweisen. Werden Weichmacher eingesetzt, dann werden sie vorzugsweise in Mengen von höchstens 35 Gew.-teilen, bevorzugt höchstens 25 Gew.teilen, jeweils bezogen auf 100 Gew.-teile Organopolysiloxane (1), eingesetzt.

Beispiele für Fungizide sind Tebuconazol, Propiconazol, Thiabendazol, Carbendazim, Butylbenzisothiazolinon, Dijodomethyltolylsulfon, Dichloroctylisothiazolinon, Octylisothiazolinon, Zinkpyrithion.
Wenn Fungizide eingesetzt werden, werden sie vorzugsweise in Mengen von höchstens 2000 Gew.-ppm, bezogen auf das Gesamtgewicht der Organopolysiloxane (1) eingesetzt.

Beispiele für Haftvermittler sind Glycidoxypropyltrimethoxysilan, Glycidoxypropyltriethoxysilan, Glycidoxypropyl-Methyldimethoxysilan, Glycidoxypropyl-Methyldiethoxysilan, Dibutoxy-diacetoxysilan, Methacryloxypropyltrimethoxysilan, Methacryloxypropyltriethoxysilan, Methacryloxypropylmethyldimethoxysilan, Methacryloxypropyl-methyldiethoxysilan Methacryloxypropyltriacetoxysilan, Methacryloxypropylmethyldiacetoxysilan.
Wenn Haftvermittler eingesetzt werden, werden sie vorzugsweise in Mengen von höchstens 2,5 Gew.-teilen, bezogen auf 100 Gew.teile der Organopolysiloxane (1) eingesetzt.

Beispiele für Rheologieadditive sind behandelte oder unbehandelte Rhizinusöle, Polyethylenoxide oder Polypropylenoxide oder deren Copolymere, gegebenenfalls mit Siloxaneinheiten.
Wenn Rheologieadditive eingesetzt werden, werden sie vorzugsweise in Mengen von höchstens 1 Gew.-teil, bezogen auf 100 Gew.-teile der Organopolysiloxane (1) eingesetzt.

Beispiele für Pigmente sind Titandioxid, Ruß, Metalloxide, Metallsulfide, organische Pigmente oder mineralische Pigmente wie beispielsweise Spinelle.
Wenn Pigmente eingesetzt werden, werden sie vorzugsweise in Mengen von höchstens 2,5 Gew.-teilen, bezogen auf 100 Gew.teile der Organopolysiloxane (1) eingesetzt.

In einer bevorzugten Ausführungsvariante werden die erfindungsgemäßen Organopolysiloxanmassen hergestellt unter Verwendung von
(1) Organopolysiloxane
(2) Acyloxysilane bzw. deren Teilhydrolysate
(3) Organozinnverbindungen als Kondensationskatalysator
(4) Anhydrit
(5) pyrogene Kieselsäure

In einer weiteren bevorzugten Ausführungsvariante werden die erfindungsgemäßen Organopolysiloxanmassen hergestellt unter Verwendung von
(1) Organopolysiloxane
(2) Acyloxysilane bzw. deren Teilhydrolysate
(3) Organozinnverbindungen als Kondensationskatalysator
(4) Anhydrit
(5) pyrogene Kieselsäure
(8) Weichmacher

In einer weiteren bevorzugten Ausführungsvariante werden die erfindungsgemäßen Organopolysiloxanmassen hergestellt unter Verwendung von
(1) Organopolysiloxane
(2) Acyloxysilane bzw. deren Teilhydrolysate
(3) Organozinnverbindungen als Kondensationskatalysator
(4) Anhydrit
(5) pyrogene Kieselsäure
(8) Weichmacher auf Basis von Kohlenwasserstoffgemischen und Fungizid

In einer weiteren bevorzugten Ausführungsvariante werden die erfindungsgemäßen Organopolysiloxanmassen hergestellt unter Verwendung von
(1) Organopolysiloxane
(2) Acyloxysilane bzw. deren Teilhydrolysate
(3) Strontiumcarboxylat als Kondensationskatalysator
(4) Anhydrit
(5) pyrogene Kieselsäure
(8) Weichmacher

In einer weiteren bevorzugten Ausführungsvariante werden die erfindungsgemäßen Organopolysiloxanmassen hergestellt unter Verwendung von
(1) Organopolysiloxane
(2) Acyloxysilane bzw. deren Teilhydrolysate
(3) Zinkcarboxylat als Kondensationskatalysator
(4) Anhydrit
(5) pyrogene Kieselsäure
(8) Weichmacher

In einer weiteren bevorzugten Ausführungsvariante werden die erfindungsgemäßen Organopolysiloxanmassen hergestellt unter Verwendung von
(1) Organopolysiloxane
(2) Acyloxysilane bzw. deren Teilhydrolysate
(3) Titanchelat als Kondensationskatalysator
(4) Anhydrit
(5) pyrogene Kieselsäure
(8) Weichmacher

Zur Herstellung der erfindungsgemäßen Massen können alle Bestandteile der jeweiligen Masse in beliebiger Reihenfolge miteinander vermischt werden. Dieses Vermischen erfolgt vorzugsweise bei Raumtemperatur und dem Druck der umgebenden Atmosphäre, also etwa 900 bis 1100 hPa, und vorzugsweise wird bei diesem Vermischen der Zutritt von Wasser vermieden. Falls gewünscht, kann dieses Vermischen aber auch bei höheren Temperaturen erfolgen, z.B. bei einer Temperatur im Bereich von 25 bis 80°C.

Für die Vernetzung der erfindungsgemäßen Massen reicht der normale Wassergehalt der Luft aus. Die Vernetzung der erfindungsgemäßen Massen erfolgt vorzugsweise bei Raumtemperatur. Die Vernetzung kann, falls erwünscht, auch bei höheren oder niedrigeren Temperaturen als Raumtemperatur, z. B. bei -5° bis 15°C oder bei 30° bis 50°C durchgeführt werden. Ebenso kann die Vernetzung auch bei Konzentrationen von Wasser durchgeführt werden, die den normalen Wassergehalt der Luft übersteigen.
Vorzugsweise wird die Vernetzung bei einem Druck von 100 bis 1100 hPa, insbesondere beim Druck der umgebenden Atmosphäre, durchgeführt.

Ein weiterer Gegenstand der vorliegenden Erfindung sind Formkörper, hergestellt durch Vernetzung der erfindungsgemäßen Massen.

Die erfindungsgemäßen Elastomere, zu denen die erfindungsgemäßen Massen vernetzen, haben den Vorteil, dass sie eine hohe Bewegungsaufnahme haben.

Die erfindungsgemäßen Elastomere, zu denen die erfindungsgemäßen Massen vernetzen, haben den weiteren Vorteil, dass sie einen E-Modul von kleiner 0,45 N/mm² aufweisen.

Überraschenderweise wurden trotz hohem Füllstoffgehalt der erfindungsgemäßen Massen Elastomere mit hohen Bewegungsaufnahmen und einem niedrigen Modul erhalten.

Die erfindungsgemäßen Massen haben den weiteren Vorteil, dass die eine gute Lagerstabilität sowie einen geringen Schwund aufweisen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich als elastischer Kleb- oder Dichtstoff, zur Abdichtung von Fugen, Spalten oder Verbindungsstellen, wie beispielsweise im Sanitärbereich, Fensterbau, Verglasung, bei Baumaterialien, Konstruktionskörpern, Automobilen, Schienenfahrzeugen, Flugzeugen, Schiffen, Haushaltsgeräten, Maschinen.

### Beispiele:

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

Im Rahmen der vorliegenden Erfindung werden die Viskositäten wie folgt bestimmt:
Die Messungen der dynamischen Viskosität der Organopolysiloxane beruhen auf DIN 53019-1 am Platte-Kegel-Rotationsviskosimeter mit einem Kegel mit 50mm Durchmesser und einem Kegelwinkel von 2° bei 25°C mit einer Scherrate von 1 1/s bis 10 1/s. Die Auswertung erfolgt über lineare Regression im linearen Bereich.

Die Viskositätsangaben und Pasteneigenschaften der erfindungsgemäßen vernetzbaren Massen beruhen auf der Messung nach DIN 54458 mit Hilfe des Amplitudensweeps. Gemessen wird über Platte-Platte mit einem Kegel mit 25mm Durchmesser und 0,5 mm Abstand bei einer Kreisfrequenz von 10Hz.
Viskosität η*(γ=0,1%): entspricht dem komplexen Viskositätswert [mPa*s] bei einer Deformation von 0,1% gemäß DIN 54458. Viskosität η*(γ=100%): entspricht dem komplexen Viskositätswert [mPa*s] bei einer Deformation von 100% gemäß DIN 54458. Fließgrenze: entspricht der Schubspannung [Pa] an dem Punkt an dem das Verhältnis von Verlustmodul zu Speichermodul gleich 1 ist.

Die gewichtsmittlere Molmasse M_{w} und zahlenmittlere Molmasse Mₙ werden dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Die Hautbildungszeit wird bestimmt als die Zeit, nach der an einem ausgebrachten Siliconstrang bei Berührung mit einem Bleistift der Härte HB an diesem kein Rückstand mehr anhaftet.

Die Frühfestigkeit wird ermittelt, indem auf einem 0,25mm dicken Aluminiumblech mit einer Rakel ein Silikonstreifen von 10mm Breite und 6mm Höhe aufgebracht wird, dann in 30-Minuten Intervallen jeweils ein Probekörper um 90° geknickt wird. Angegeben wird die Zeit als Frühfestigkeit, die benötigt wird, bis der Silikonstreifen keinen Einriss mehr aufweist.

Die Shore-A-Härte wird nach DIN 53505-87 (DIN = Deutsche Industrie Norm) bestimmt.

Die Reißdehnung, Zugfestigkeit und Spannung bei 100% Dehnung, wird nach DIN 53504-85 S2 bestimmt.

Der 100% Spannungswert entspricht dem Sekantenmodul bei einer Dehnung von 100%.

Härte, Reißdehnung, 100% Spannungswert und Reißfestigkeit nach Klimastresslagerung bei 7d/70°C/95% rel. Luftfeuchtigkeit werden bestimmt nach DIN 53505-87 bzw. DIN 53504-85 S2, wobei die Probekörper zunächst für 14 Tage bei 23°C/50% rel. Luftfeuchtigkeit vulkanisieren und dann im Klimaschrank für 7 Tage bei 70°C und 95% rel. Luftfeuchtigkeit gelagert werden. Die Probekörper werden nach 1 Stunde Ruhezeit im Normklima 23°C/50% rel. Luftfeuchtigkeit gemäß Normvorgabe gemessen.

Die Prüfung der Bewegungsaufnahme wird normgerecht nach ASTM C719 ermittelt, indem Aluminiumträger (76,2 mm x 25,4 mm x 6,4 mm, Fa Rocholl, 6016) mit Methylethylketon gereinigt und mit Grundierung G 791 (Wacker Chemie AG) vorbehandelt werden. Nach 24h werden die Probekörper hergestellt, wobei der Dichtstoff in der geforderten Weise zwischen zwei Aluminiumträger eingebracht wird, und die Probekörper werden weiter nach ASTM C719 konditioniert und gemessen; die Einstufung in die Klasse erfolgt gemäß ASTM C 920, Kapitel 4.

### Beispiel 1:

100 Teile eines α,ω-Dihydroxy-Dimethylpolysiloxans mit einer Viskosität von 80 000 mPa*s (OH-Gehalt 470 Gew.-ppm) werden mit 20 Teilen eines trimethylsilyl-endblockierten Polydimethylsiloxans mit einer Viskosität von 100 mPa*s vermischt, dann mit 90 Teilen des Anhydrits HEF der Firma Krone homogenisiert. Anschließend werden 11 Teile einer Acetoxysilanmischung (70 Gew-% Ethyltrisacetoxysilan und 30 Gew-% Methyltrisacetoxysilan) zugegeben und homogenisiert. Anschließend werden 9 Teilen einer pyrogenen Kieselsäure mit einer Oberfläche nach BET von 150 m²/g homogen eingemischt und 0,04 Teile Di-n-butylzinndiacetat zugegeben. Die Mischung wird für 5 Minuten bei einem Druck von 100 mbar entgast.

### Beispiel 2:

100 Teile eines α,ω-Dihydroxy-Dimethylpolysiloxans mit einer Viskosität von 80 000 mPa*s (OH-Gehalt 470 Gew.-ppm) werden mit 20 Teilen eines trimethylsilyl-endblockierten Polydimethylsiloxans mit einer Viskosität von 100 mPa*s vermischt, dann mit 90 Teilen des Anhydrits HEF der Firma Krone homogenisiert. Anschließend werden 11 Teile einer Acetoxysilanmischung (70 Gew-% Ethyltrisacetoxysilan und 30 Gew-% Methyltrisacetoxysilan) zugegeben und homogenisiert. Anschließend werden 9 Teilen einer pyrogenen Kieselsäure mit einer Oberfläche nach BET von 150 m²/g homogen eingemischt und 2 Teile Oktasoligen Strontium 10 der Fa. OMG zugegeben. Die Mischung wird für 5 Minuten bei einem Druck von 100 mbar entgast.

### Vergleichsbeispiel 1:

100 Teile eines α,ω-Dihydroxy-Dimethylpolysiloxans mit einer Viskosität von 80 000 mPa*s (OH-Gehalt 470 Gew.-ppm) werden mit 20 Teilen eines trimethylsilyl-endblockierten Polydimethylsiloxans mit einer Viskosität von 100 mPa*s vermischt, dann 90 Teile Talkum 2/0 von Fa. Novotalk eingemischt. Anschließend werden 11 Teile einer Acetoxysilanmischung (70 Gew-% Ethyltrisacetoxysilan und 30 Gew-% Methyltrisacetoxysilan) zugegeben und homogenisiert. Anschließend werden 9 Teile einer pyrogenen Kieselsäure mit einer Oberfläche nach BET von 150 m²/g homogen eingemischt und 0,04 Teile Di-n-butylzinndiacetat. Die Mischung wird für 5 Minuten bei einem Druck von 100 mbar entgast.

### Vergleichsbeispiel 2:

100 Teile eines α,ω-Dihydroxy-Dimethylpolysiloxans mit einer Viskosität von 80 000 mPa*s (OH-Gehalt 470 Gew.-ppm) werden mit 20 Teilen eines trimethylsilyl-endblockierten Polydimethylsiloxans mit einer Viskosität von 100 mPa*s vermischt, dann mit 90 Teilen Polestar 200 von Fa. Imerys (Kaolin) homogenisiert. Anschließend werden 11 Teile einer Acetoxysilanmischung (70 Gew-% Ethyltrisacetoxysilan und 30 Gew-% Methyltrisacetoxysilan) zugegeben und homogenisiert. Anschließend werden 9 Teile einer pyrogenen Kieselsäure mit einer Oberfläche nach BET von 150 m²/g homogen eingemischt und 0,04 Teile Di-n-butylzinndiacetat eingemischt. Die Mischung wird für 5 Minuten bei einem Druck von 100 mbar entgast.

Die Produkteigenschaften sind in der Tabelle zusammengefasst.

**Tabelle:**

| Beispiel bzw. Vergleichsversuch | | 1 | 2 | V1 | V2 |
|---|---|---|---|---|---|
| Viskosität η*(γ=0,1%) | [mPa*s] | 571000 | 633000 | 513000 | 665000 |
| Viskosität η* (γ=100%) | [mPa*s] | 112000 | 106000 | 83400 | 75500 |
| Fließgrenze | [Pa*s] | 623 | 778 | 622 | 529 |
| Hautbildungszeit | [min] | 20 | 30 | 17 | 13 |
| Härte Shore A | | 28 | 23 | 29 | 35 |
| Reißdehnung | [%] | 670 | 800 | 530 | 320 |
| Reißfestigkeit | [N/mm²] | 1,2 | 1,2 | 1,4 | 2,7 |
| 100% Spannungswert | [N/mm²] | 0,43 | 0,36 | 0,57 | 1,18 |
| LM-Klassifizierung | | ja | ja | nein | nein |
| Bewegungsaufnahme nach ASTM C719* | 25% | x | x | x | - |
| | 40% | x | x | - | - |
| | 50% | - | x | - | - |

| Pastenlagerung 56d bei 50°C | | | | | |
|---|---|---|---|---|---|
| Hautbildungszeit | [min] | 27 | 28 | 23 | 19 |
| Härte Shore A | | 22 | 38 | 27 | 22 |
| Reißdehnung | [%] | 710 | 830 | 480 | 400 |
| Reißfestigkeit | [N/mm²] | 1,2 | 1,1 | 1,2 | 1,5 |
| 100% Spannungswert | [N/mm²] | 0,40 | 0,30 | 0,55 | 0,49 |

| | | | | | |
|---|---|---|---|---|---|
| *) erfüllt (x); nicht erfüllt (-) | | | | | |

Die erfindungsgemäßen Beispiele zeigen überraschend hohe Bewegungsaufnahmen von größer gleich 40% nach ASTM C719. Die erfindungsgemäßen Beispiele weisen im Gegensatz zu den Vergleichsbeispielen mit Talkum und Kaolin einen E-Modul von kleiner 0,45 N/mm² auf und sind damit klassifiziert als "Low modulus" Produkte (Klassifizierung nach ISO 11600).

Die erfindungsgemäßen Massen verhalten sich im beschleunigten Alterungstest über 8 Wochen (56d) bei 50°C praktisch unverändert. Im Vergleich dazu sind die mit Kaolin gefüllten Massen nicht lagerstabil, Härte und Modul brechen unter beschleunigter Pastenlagerung bei 50°C stark ein. Mit Talkum gefüllte Massen sind lagerstabil aber erreichen nur kleinere Bewegungsaufnahmen und nicht die Klasse der "Low Modulus" Produkte nach ISO 11600.

Die Produkte sind trotz hoher Füllgrade gut aus der Kartusche applizierbar und haben ein gutes Verarbeitungsverhalten hinsichtlich Extrusionsrate und Fadenzug.

## Patentansprüche

1. Durch Kondensationsreaktion vernetzbare Organopolysiloxanmassen herstellbar unter Verwendung von
(1) kondensationsfähige Endgruppen aufweisende Organopolysiloxane
(2) mindestens drei direkt an Silicium gebundene Acyloxygruppen aufweisende Organosiliciumverbindungen,
(3) Kondensationskatalysatoren,
(4) Anhydrit und
(5) Kieselsäuren, in Mengen von mindestens 1 und höchstens 15 Gew.-teilen, vorzugsweise höchstens 10 Gew.-teilen, jeweils bezogen auf 100 Gew.-teile Organopolysiloxan (1)
mit der Maßgabe, dass
(6) die Mitverwendung von Kaolin ausgeschlossen ist,
(7) weitere Füllstoffe in Mengen von höchstens 25 Gewteilen, vorzugsweise höchstens 15 Gew.-teile, bevorzugt höchstens 5 Gew.-teile, jeweils bezogen auf 100 Gew-teile Organopolysiloxane (1), mitverwendet werden und
(8) ggf. weitere Stoffe, die üblicherweise in durch Kondensationsreaktion vernetzbare Massen mitverwendet werden und die verschieden von den Bestandteilen (1) bis (7) sind.

2. Durch Kondensationsreaktion vernetzbare Organopolysiloxanmassen nach Anspruch 1, **dadurch gekennzeichnet, dass** als Kondensationskatalysatoren (3) Zinn-freie Kondensationskatalysatoren eingesetzt werden.

3. Durch Kondensationsreaktion vernetzbare Organopolysiloxanmassen nach Anspruch 1 oder 2, **dadurch gekennzeichnet, dass** die Mitverwendung von weiteren Füllstoffen (7) ausgeschlossen ist.

4. Durch Kondensationsreaktion vernetzbare Organopolysiloxanmassen nach Anspruch 1, 2 oder 3, **dadurch gekennzeichnet, dass** als weitere Stoffe (8) solche ausgewählt aus der Gruppe der Weichmacher, Fungizide, Haftvermittler, Rheologieadditive und Pigmente und deren Mischungen mitverwendet werden.

5. Verfahren zur Herstellung der durch Kondensationsreaktion vernetzbaren Massen gemäß einem oder mehreren der Ansprüche 1 bis 4 durch Vermischen aller Bestandteile in beliebiger Reihenfolge.

6. Formkörper, hergestellt durch Vernetzung der Massen gemäß einem oder mehreren der Ansprüche 1 bis 4.

## Claims

1. Organopolysiloxane compositions crosslinkable by condensation reaction and producible using
(1) organopolysiloxanes containing condensable end groups,
(2) organosilicon compounds containing at least three acyloxy groups bonded directly to silicon,
(3) condensation catalysts,
(4) anhydrite, and
(5) silicas, in amounts of at least 1 and not more than 15 parts by weight, preferably not more than 10 parts by weight, based in each case on 100 parts by weight of organopolysiloxane (1),
with the proviso that
(6) no kaolin is used,
(7) further fillers are used in amounts of at most 25 parts by weight, preferably at most 15 parts by weight, more preferably at most 5 parts by weight, based in each case on 100 parts by weight of organopolysiloxanes (1), and
(8) optionally further substances, which are used customarily in compositions crosslinkable by condensation reaction and which are different from the constituents (1) to (7).

2. Organopolysiloxane compositions crosslinkable by condensation reaction according to Claim 1, **characterized in that** condensation catalysts (3) used comprise tin-free condensation catalysts.

3. Organopolysiloxane compositions crosslinkable by condensation reaction according to Claim 1 or 2, **characterized in that** no further fillers (7) are used.

4. Organopolysiloxane compositions crosslinkable by condensation reaction according to Claim 1, 2 or 3, **characterized in that** further substances (8) used comprise substances selected from the group of plasticizers, fungicides, adhesion promoters, rheological additives, and pigments, and mixtures thereof.

5. Method for producing the compositions crosslinkable by condensation reaction according to one or more of Claims 1 to 4 by mixing all of the constituents in any order.

6. Molding produced by crosslinking the compositions according to one or more of Claims 1 to 4.

## Revendications

1. Matériaux organopolysiloxane réticulables par une réaction de condensation, pouvant être fabriqués en utilisant :
(1) des organopolysiloxanes comprenant des groupes terminaux aptes à une condensation,
(2) des composés d'organosilicium comprenant au moins trois groupes acyloxy reliés directement au silicium,
(3) des catalyseurs de condensation,
(4) de l'anhydrite et
(5) des silices, en quantités d'au moins 1 et d'au plus 15 parties en poids, de préférence d'au plus 10 parties en poids, à chaque fois par rapport à 100 parties en poids d'organopolysiloxane (1),
à condition que
(6) l'utilisation de kaolin soit exclue,
(7) d'autres charges soient utilisées en quantités d'au plus 25 parties en poids, de préférence d'au plus 15 parties en poids, avantageusement d'au plus 5 parties en poids, à chaque fois par rapport à 100 parties en poids d'organopolysiloxanes (1), et
(8) éventuellement d'autres substances, qui sont généralement utilisées dans des matériaux réticulables par une réaction de condensation et qui sont différentes des constituants (1) à (7).

2. Matériaux organopolysiloxane réticulables par une réaction de condensation selon la revendication 1, **caractérisés en ce que** des catalyseurs de condensation sans étain sont utilisés en tant que catalyseurs de condensation (3).

3. Matériaux organopolysiloxane réticulables par une réaction de condensation selon la revendication 1 ou 2, **caractérisés en ce que** l'utilisation d'autres charges (7) est exclue.

4. Matériaux organopolysiloxane réticulables par une réaction de condensation selon la revendication 1, 2 ou 3, **caractérisés en ce que** d'autres substances (8) choisies dans le groupe constitué par les plastifiants, les fongicides, les promoteurs d'adhésion, les additifs de rhéologie et les pigments et leurs mélanges sont utilisées.

5. Procédé de fabrication des matériaux réticulables par une réaction de condensation selon une ou plusieurs des revendications 1 à 4, par mélange de tous les constituants dans un ordre quelconque.

6. Corps moulé, fabriqué par réticulation des matériaux selon une ou plusieurs des revendications 1 à 4.
